(19) Europäisches Patentamt
European Patent Office
Office européen des brevets

(11) **EP 3 106 218 A1**

(12) **EUROPEAN PATENT APPLICATION**
published in accordance with Art. 153(4) EPC

(43) Date of publication:
**21.12.2016 Bulletin 2016/51**

(51) Int Cl.:
***B01J 20/08*** (2006.01)   ***B01D 53/02*** (2006.01)
***B01D 53/04*** (2006.01)   ***B01J 20/34*** (2006.01)
***C01B 31/20*** (2006.01)

(21) Application number: **14882666.2**

(22) Date of filing: **15.10.2014**

(86) International application number:
**PCT/JP2014/077440**

(87) International publication number:
**WO 2015/122053 (20.08.2015 Gazette 2015/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.02.2014 JP 2014026237**

(71) Applicant: **Hitachi Chemical Co., Ltd.**
**Chiyoda-ku**
**Tokyo 100-6606 (JP)**

(72) Inventors:
• **YOSHIKAWA Kouhei**
  **Tokyo 100-8280 (JP)**

• **SATOU Hiroki**
  **Tokyo 100-8280 (JP)**
• **KANEEDA Masato**
  **Tokyo 100-8280 (JP)**
• **NAKAMURA Hidehiro**
  **Tokyo 100-6606 (JP)**
• **SHIRASAKA Toshiaki**
  **Tokyo 100-6606 (JP)**
• **KITAMURA Kenetsu**
  **Tokyo 100-6606 (JP)**
• **ENOMOTO Kazuhiro**
  **Tokyo 100-6606 (JP)**

(74) Representative: **Beetz & Partner mbB**
**Patentanwälte**
**Steinsdorfstraße 10**
**80538 München (DE)**

(54) **CARBON-DIOXIDE CAPTURING MATERIAL, AND CARBON-DIOXIDE RECOVERY APPARATUS USING SAME**

(57)    Provided is a carbon dioxide capturing material that captures a large amount of carbon dioxide, less suffers from decrease in an amount of the captured carbon dioxide even after firing, and has excellent heat resistance. The carbon dioxide capturing material separates and recovers carbon dioxide from a carbon-dioxide-containing gas. The capturing material includes an oxide containing Ce and Al. The oxide contains Ce in a highest content among metal elements in the oxide and contains Al in a content of 0.01% by mole to 40% by mole.

FIG. 1

**Description**

**Technical Field**

The present invention relates to a carbon dioxide capturing material and to a carbon dioxide recovery apparatus using the capturing material.

**Background Art**

Global warming due to greenhouse gas emission becomes a worldwide issue. Examples of the greenhouse gas include carbon dioxide ($CO_2$), methane ($CH_4$), and chlorofluorocarbons (CFCs). Among them, $CO_2$ applies greatest impact on global warming, and $CO_2$ emission reduction becomes imperative. Possible solutions to achieve the emission reduction include techniques of chemical absorption, physical absorption, membrane separation, adsorptive separation, and cryogenic separation. These techniques include a $CO_2$ separation/recovery technique using a solid $CO_2$ capturing material.

In a $CO_2$ separation and recovery system using such a $CO_2$ capturing material, a $CO_2$-containing gas is introduced into a capturing material container packed with the $CO_2$ capturing material, and the gas is brought into contact with the $CO_2$ capturing material to capture and remove $CO_2$ from the gas. Thereafter the capturing material is heated, or the internal pressure of the capturing material container is reduced, to desorb and recover $CO_2$ from the capturing material. The $CO_2$ capturing material after the $CO_2$ desorption is cooled, and then used in another $CO_2$ capture and removal process by feeding another portion of the $CO_2$-containing gas.

Patent Literature 1 describes a technique relating to a carbon dioxide capturing material. The technique focuses attention on average pore size and provides a carbon dioxide capturing material for efficiently capturing carbon dioxide. The carbon dioxide capturing material is an oxide containing Ce and at least one element selected from the group consisting of K, Mg, Al, and Pr. The carbon dioxide capturing material contains the at least one element selected from the group consisting of K, Mg, Al, and Pr in a total mole ratio to Ce of 0.01 to 1.00 in terms of elementary metal.

**Citation List**

**Patent Literature**

Patent Literature 1: Japanese Patent Application Laid-Open No. 2013-59703

**Summary of Invention**

**Technical Problem**

Experimental investigations demonstrated that the carbon dioxide capturing material described in PTL 1 has an initial specific surface area of 100 $m^2$/g or more, but has a specific surface area of about 80 $m^2$/g after firing at 500°C. Specifically, the carbon dioxide capturing material undergoes large reduction in specific surface area upon firing and has room for improvements in heat resistance (thermal stability). In general, a capturing material tends to capture a larger amount of carbon dioxide with an increasing specific surface area.

The present invention has an object to provide a carbon dioxide capturing material that captures a large amount of carbon dioxide, less suffers from decrease in an amount of the captured carbon dioxide, and has excellent heat resistance.

**Solution to Problem**

The present invention provides a carbon dioxide capturing material for separating and recovering carbon dioxide from a carbon-dioxide-containing gas. The carbon dioxide capturing material is an oxide containing Ce and Al. The oxide contains Ce in a highest content among metal elements in the oxide and contains Al in a content of 0.01% by mole to 40% by mole.

**Advantageous Effects of Invention**

The present invention provides a carbon dioxide capturing material that captures a large amount of carbon dioxide, less suffers from decrease in the amount of the captured carbon dioxide, and has excellent heat resistance.

**Brief Description of Drawings**

Figure 1 is a graph illustrating how the an amount of captured $CO_2$ varies depending on the Al content in $CO_2$ capturing materials;

Figure 2 is a graph illustrating how an amount of the captured $CO_2$ varies depending on the content of any one of Al, Fe, Cu, V, and Mo in the $CO_2$ capturing materials;

Figure 3 is a graph illustrating how the decrease in an amount of the captured $CO_2$ varies depending on the content of any one of Fe, Cu, V, and Mo in the $CO_2$ capturing materials;

Figure 4 is a schematic diagram illustrating a $CO_2$ recovery apparatus according to an embodiment of the present invention, the apparatus using a $CO_2$ capturing material according to the present invention and including a mechanism that heats the capturing material by passing water vapor (steam) through a heat-transfer tube; and

Figure 5 is a schematic diagram illustrating a $CO_2$ recovery apparatus according to an embodiment of the present invention, the apparatus using the $CO_2$ capturing material according to the present invention and including a mechanism that reduces the internal pressure of a reactor.

**Description of Embodiments**

The present invention relates to a carbon dioxide capturing material for separating and recovering $CO_2$ from a $CO_2$-containing gas (carbon-dioxide-containing gas) such as a combustion gas. The carbon dioxide capturing material is hereinafter also referred to as a "$CO_2$ capturing material". In particular, the present invention relates to a technique that increases an amount of the captured $CO_2$. The carbon-dioxide-containing gas herein is typified by a combustion gas having a carbon dioxide concentration of 3% to 18% by volume, but the carbon-dioxide-containing gas for use in the present invention is not limited thereto, and the present invention is also applicable typically to exhaust gases from chemical plants that treat solid reactions typically of calcium carbonate. In this case, the carbon dioxide concentration can possibly be 18% by volume or more. Carbon dioxide is more easily recovered from the gas with an increasing carbon dioxide concentration. The present invention is not limited to carbon-dioxide-containing gases having a carbon dioxide concentration of 3% by volume or more, but is also applicable to gases having a carbon dioxide concentration of less than 3% by volume.

Embodiments of the present invention will be illustrated below. It should be noted, however, that the embodiments and examples as follows are never construed to limit the scope of the present invention.

The $CO_2$ capturing material according to the present invention is an oxide containing Ce and Al. The capturing material (oxide) contains Ce in a highest content among metal elements in the capturing material and contains Al in a content of 0.01% by mole to 40% by mole (0.01 to 40% by mole). It has been verified that the $CO_2$ capturing material having the configuration can capture a larger amount of $CO_2$.

The advantageous effects are obtained probably because (1) Ce and Al form complex oxides to thereby form sites that easily capture $CO_2$; and (2) the capturing material has a larger specific surface area. An oxide containing Al in a content of more than 40% by mole and an oxide containing Al alone capture $CO_2$ in smaller amounts as compared with an oxide containing Ce alone. Even an oxide containing Al in a content of 40% by mole has only to contain Ce in a content of 40% by mole or more in order to contain Ce in a highest content among metal elements. The oxide herein may contain Ce and one or more other elements in highest contents among metal elements in the oxide.

The term "percent (%) by mole" used herein which is a unit indicating the content of a metal element refers to the proportion of the metal element based on the total amount (100% by mole) of all metal elements contained in the $CO_2$ capturing material. Specifically, the term "percent (%) by mole" refers to a value on mole basis determined by dividing the content of the specific metal element by the total content of all metal elements contained in the $CO_2$ capturing material.

The Al content is more preferably 0.01% by mole to 30% by mole (0.01% to 30% by mole) and particularly preferably 5% by mole to 20% by mole (5% to 20% by mole).

The oxide constituting the $CO_2$ capturing material may further contain 0.01% by mole or more of at least one metal element selected from the group consisting of Fe, Cu, V, and Mo, in addition to Ce and Al. The $CO_2$ capturing material captures $CO_2$ in a decreasing amount with an increasing total content of these metal elements, but can capture $CO_2$ in a larger amount as compared with the oxide containing Ce alone

(cerium oxide alone). This is because of the presence of Al in the oxide.

Preferred contents of these elements are 10% by mole or less for Fe, 7% by mole or less for Cu, 3% by mole or less for V, and 3% by mole or less for Mo. In case that two or more of these metal elements are contained, the oxide preferably has a composition meeting a condition specified by Expression (1), where Expression (1) is determined by weighting based on the correlation between proportions (contents) of the elements and the decrease in the amount of

the captured $CO_2$.

$$(\text{Fe content}) \times 1.0 + (\text{Cu content}) \times 1.3 + (\text{V content})$$

$$\times 3.3 + (\text{Mo content}) \times 3.3 \leq 10 \qquad (1)$$

where the contents in the equation are indicated in mole percent.

Advantageously, the use of the $CO_2$ capturing material according to the present invention allows the use of a low-purity raw material and eliminates or minimizes the need for a purification step for removing impurities. This results in reduction of costs for raw materials and facilities.

Examples of the compound to be used as the raw material to synthetically prepare the $CO_2$ capturing material according to the present invention include, but are not limited to, oxides, nitrates, chlorides, sulfates, carbonates, phosphates, hydroxides, oxalates, acetates, and formates.

The raw material for Ce may also be selected from minerals such as monazite and bastnaesite. The minerals may further contain, in addition to Ce, at least one of lanthanides excluding Ce (La, Pr, Nd, Pm, Sm, Eu, Gd, Tb, Dy, Ho, Er, Tm, Yb, and Lu). In case that Ce and at least one of these lanthanide elements are contained, the resulting oxide captures $CO_2$ in a larger amount as compared with an oxide containing Ce alone and has not always to be purified so as to reduce the contents of the lanthanide elements other than Ce. The total content of the lanthanides is typically 0.01% by mole to 50% by mole, and more preferably 0.01% by mole to 30% by mole. The use of the raw material as mentioned above reduces purification cost and still increases the amount of the captured $CO_2$.

Examples of the technique to synthetically prepare the $CO_2$ capturing material according to the present invention include chemical preparation techniques such as impregnation, kneading, coprecipitation, and a sol-gel process; and physical preparation techniques such as vapor deposition. For example, the $CO_2$ capturing material may be prepared by preparing a solution containing cerium nitrate and aluminum nitrate, adding a basic compound to the solution to adjust the pH to 7 to 10, and thereby co-precipitating Ce and Al. The basic compound is exemplified by, but not limited to, aqueous ammonia solution, sodium hydroxide (NaOH), and calcium hydroxide ($Ca(OH)_2$). In this case, aluminum hydroxide ($Al(OH)_3$) forms flocs and thereby causes the synthesized product to be settled at a higher velocity and to be synthesized in a shorter time.

In addition, the carbon dioxide capturing material according to the present invention (e.g., Example 1 mentioned later) may have a specific surface area of 130 $m^2/g$ even after firing at 600°C. The carbon dioxide capturing material is accordingly considered to less suffer from decrease or deterioration in the amount of the captured carbon dioxide.

In contrast, the carbon dioxide capturing material described in Example 5 of PTL 1 has a reduced specific surface area of about 80 $m^2/g$ after firing at 500°C. Accordingly, this carbon dioxide capturing material is considered to suffer from large decrease in the amount of the captured carbon dioxide.

The firing temperature is higher than an actual regeneration temperature. The firing test, however, is a high-temperature firing test performed as an accelerated test so as to determine, at an early stage, whether a tested carbon dioxide capturing material deteriorates upon repetition of adsorption and regeneration of the carbon dioxide capturing material. In practice, such a capturing material may gradually deteriorate during a long-term use even at a service temperature of about 200°C.

Firing at 600°C is far severer than firing at 500°C. Assume that a carbon dioxide capturing material has a higher specific surface area after firing at 600°C as compared with the specific surface area after firing at 500°C. This indicates that the carbon dioxide capturing material is resistant to deterioration, has excellent heat resistance, and is resistant to long-term repeated use.

These demonstrate that the carbon dioxide capturing material according to the present invention has higher heat resistance as compared with the carbon dioxide capturing material described in PTL 1. This advantageous effect is considered to owe to the presence of Al in the oxide, in addition to Ce.

Examples of constituents constituting a $CO_2$ recovery apparatus using the $CO_2$ capturing material according to the present invention include, but are not limited to, a reactor packed with the capturing material; lines that introduce a $CO_2$-containing gas and a heating gas into the reactor; a line that discharges gases from the reactor; a heating device that heats the reactor; devices that increase or decrease the internal pressure of the reactor; a condenser that condenses water vapor in the gas; a container that recovers and contains condensed water from the reactor; and a compressor that compresses the $CO_2$-containing gas.

The $CO_2$ capturing material according to the present invention may be selected from ceria and other materials having a high specific surface area, where the materials include ceria supported on or combined with another material. Examples of the other material include, but are not limited to, silica, alumina, titania, zirconia, zeolite, polymeric materials, activated carbon, molecular organic frameworks (MOFs), and zeolitic imidazolate frameworks (ZIFs). The $CO_2$ capturing material may include a constitutive minimum unit which is a granule, an aggregate of granules, or a composite of them.

In case that the carbon dioxide capturing material is formed as a structural component (member), it preferably has such a shape as to offer gas-permeability in order to reduce pressure drop. For example, the carbon dioxide capturing material may be a porous article or a honeycomb article each having a high voidage. The carbon dioxide capturing material may have an external shape of a bulk or a sheet (plate). In this connection, the carbon dioxide capturing material may have a low voidage in order to increase the $CO_2$ purity in the recovered gas. Specifically, when the capturing material has a granular shape and has a low voidage, it disadvantageously suffers from a large pressure drop, but advantageously offers a high $CO_2$ purity in the recovered gas. This is because smaller amounts of gases other than $CO_2$ remain in the voids.

Examples of a method for recovering $CO_2$ using the $CO_2$ recovery apparatus according to the present invention include, but are not limited to, methods for: recovery by temperature swing; recovery by pressure swing; and recovery by pressure and temperature swing. These recovery methods may be selected and determined in consideration of the pressure, $CO_2$ partial pressure, and temperature of the $CO_2$-containing gas. For example, assume that $CO_2$ is recovered from a combustion gas typically from a coal-fired power plant. In this case, $CO_2$ may be recovered typically by a method in which $CO_2$ is captured by the $CO_2$ capturing material and thereby removed from the $CO_2$-containing gas at about 50°C, then the $CO_2$ capturing material is heated up to 150°C to 200°C to desorb $CO_2$, and $CO_2$ with an increased purity is thus recovered.

Examples of a technique for heating the $CO_2$ capturing material include, but are not limited to, a technique of bringing a heated heat-transfer medium, such as a gas or liquid, into direct contact with the $CO_2$ capturing material; a technique of passing a heated heat-transfer medium, such as a gas or liquid, typically through a heat-transfer tube to heat the capturing material via thermal conduction through a heat-transfer surface; and a technique of heating the $CO_2$ capturing material by electrical heat generation typically with an electric furnace.

Examples of a technique to reduce the pressure of the atmosphere surrounding the $CO_2$ capturing material include, but are not limited to, a technique of mechanically reducing the pressure of the atmosphere typically with a pump or a compressor; and a technique of condensing water vapor in the atmosphere by cooling. Exemplary techniques for reducing the $CO_2$ partial pressure in the atmosphere surrounding the $CO_2$ capturing material include a technique of passing another gas than $CO_2$, in addition to the above techniques. The gas for use herein is preferably a gas that is easily separable from $CO_2$ and is particularly preferably water vapor (steam). This is because the water vapor is easily condensable by cooling.

The atmosphere surrounding the $CO_2$ capturing material may be pressurized typically by mechanical pressurization typically with a pump or compressor; or by introducing, into the reactor, a gas having a higher pressure as compared with the ambient atmosphere.

When the $CO_2$ capturing material adsorbs other substances such as SOx, NOx, and soot dust, it can possibly capture $CO_2$ in a smaller amount. To eliminate or minimize this and to maintain the $CO_2$ capturing material performance, the concentrations of the SOx, NOx, and soot dust in the $CO_2$-containing gas are preferably reduced. For example, assume that $CO_2$ is recovered from an exhaust gas from a coal-fired power plant. In this case, the $CO_2$ recovery apparatus using the $CO_2$ capturing material may possibly be disposed downstream from a denitrator (NOx remover), a desulfurizer (SOx remover), and a dust collector.

The present invention will be illustrated in further detail with reference to several examples below.

Cerium nitrate hexahydrate ($Ce(NO_3)_3·6H_2O$), aluminum nitrate nonahydrate ($Al(NO_3)_3·9H_2O$), iron (III) nitrate nonahydrate ($Fe(NO_3)_3·9H_2O$), copper (II) nitrate trihydrate ($Cu(NO_3)_2·3H_2O$), ammonium vanadate ($NH_4VO_3$), ammonium molybdate ($(NH_4)_6MO_7O_{24}-4H_2O$), and 28% by weight aqueous ammonia solution used herein were all reagents of JIS Special Grade supplied by Wako Pure Chemical Industries, Ltd.

Comparative Example 1

In 1080 g of purified water, 26.05 g of cerium nitrate hexahydrate were dissolved with vigorous stirring at room temperature to give an aqueous solution. While being stirred, the aqueous solution was combined with a 28% by weight aqueous ammonia solution added dropwise so as to have a pH of 9.0. After being stirred for 8 hours, the mixture was left stand for one hour, and precipitates were collected via washing and filtration. The collected precipitates were dried in a drying oven at 120°C, fired in an electric furnace at 400°C in an air atmosphere for one hour, and yielded cerium oxide as a $CO_2$ capturing material.

**Example 1**

An oxide was synthetically prepared as a $CO_2$ capturing material by the synthetic preparation procedure of Comparative Example 1, except for using, instead of 26.05 g of cerium nitrate hexahydrate, 23.45 g of cerium nitrate hexahydrate and 2.25 g of aluminum nitrate nonahydrate.

### Example 2

An oxide was synthetically prepared as a $CO_2$ capturing material by the synthetic preparation procedure of Comparative Example 1, except for using, instead of 26.05 g of cerium nitrate hexahydrate, 20.84 g of cerium nitrate hexahydrate and 4.50 g of aluminum nitrate nonahydrate.

### Comparative Example 2

An oxide was synthetically prepared as a $CO_2$ capturing material by the synthetic preparation procedure of Comparative Example 1, except for using, instead of 26.05 g of cerium nitrate hexahydrate, 13.03 g of cerium nitrate hexahydrate and 11.25 g of aluminum nitrate nonahydrate.

### Comparative Example 3

An aluminum oxide was prepared by firing 5 g of boehmite (Condea Pural-SB1) in an electric furnace at 400°C in an air atmosphere for one hour and used as a $CO_2$ capturing material.

### Comparative Example 4

An oxide was synthetically prepared as a $CO_2$ capturing material by the synthetic preparation procedure of Comparative Example 1, except for using, instead of 26.05 g of cerium nitrate hexahydrate, 23.45 g of cerium nitrate hexahydrate and 2.42 g of iron(III) nitrate nonahydrate.

### Comparative Example 5

An oxide was synthetically prepared as a $CO_2$ capturing material by the synthetic preparation procedure of Comparative Example 1, except for using, instead of 26.05 g of cerium nitrate hexahydrate, 23.45 g of cerium nitrate hexahydrate and 1.45 g of copper(II) nitrate trihydrate.

### Comparative Example 6

An oxide was synthetically prepared as a $CO_2$ capturing material by the synthetic preparation procedure of Comparative Example 1, except for using, instead of 26.05 g of cerium nitrate hexahydrate, 23.45 g of cerium nitrate hexahydrate and 0.70 g of ammonium vanadate.

### Comparative Example 7

An oxide was synthetically prepared as a $CO_2$ capturing material by the synthetic preparation procedure of Comparative Example 1, except for using, instead of 26.05 g of cerium nitrate hexahydrate, 23.45 g of cerium nitrate hexahydrate and 1.06 g of ammonium molybdate.

### Measuring Method of Amount of Captured $CO_2$

A tested $CO_2$ capturing material was pelletized using a die having a diameter of 40 mm and a pressing machine at 200 kgf. The pellets were pulverized, and sized and granulated into granules of a size of 0.5 to 1.0 mm using a sieve. An aliquot (1.0 ml) of the granules was measured with a graduated cylinder and placed securely in a quartz glass tubular reactor.

The tubular reactor was placed in an electric furnace. The temperature of the $CO_2$ capturing material was raised up to 400°C while passing He through the reactor at a flow rate of 150 ml/min, and held at that temperature for one hour to remove impurities and adsorbed gases from the capturing material.

The $CO_2$ capturing material temperature was decreased down to 50°C by cooling. While keeping the specimen temperature at 50°C in an electric furnace, the specimen was subjected to a pulsed $CO_2$ capturing test to measure the amount of the captured $CO_2$. A sample gas used herein was a gaseous mixture containing 12% by volume of $CO_2$ and 88% by volume of He. In a pulsed manner, 10 ml of the sample gas were introduced for 2 minutes every 4 minutes, and the $CO_2$ concentration at the tubular reactor outlet was measured by gas chromatography. The pulsed introduction of the sample gas was performed until the $CO_2$ concentration measured at the tubular reactor outlet became saturated. He carrier gas was also used.

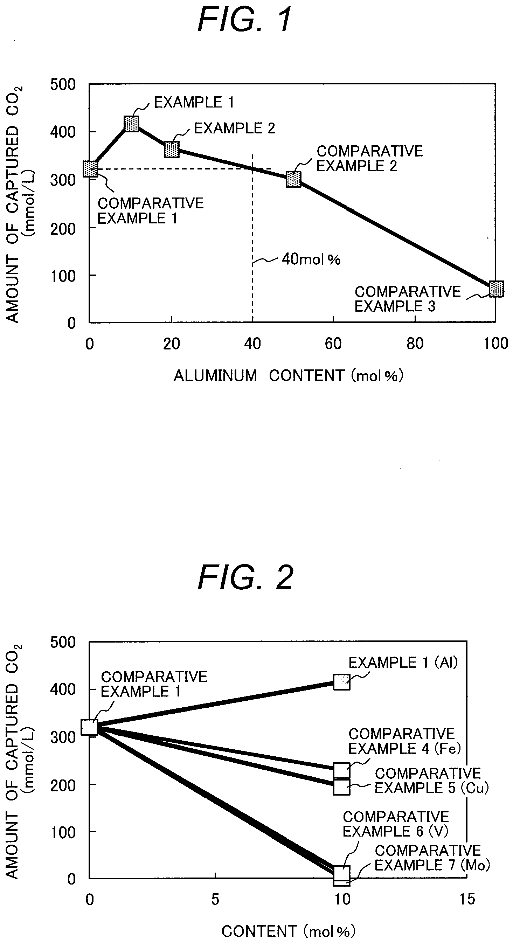

Figure 1 is a graph illustrating how the amount of the captured $CO_2$ varies depending on the Al content in the

$CO_2$ capturing materials prepared in the examples and comparative examples.

Figure 1 indicates that the oxides as the $CO_2$ capturing materials capture larger amounts of $CO_2$ as compared with the oxide containing Ce alone according to Comparative Example 1 when they contain Al in a content of from 0.01% by mole to 40% by mole.

Figure 2 is a graph illustrating how the amount of the captured $CO_2$ in the $CO_2$ capturing materials each further containing any one of Fe, Cu, V, and Mo varies depending on the content of the metal element.

Figure 2 indicates that the $CO_2$ capturing materials which further contain any one of Fe, Cu, V, and Mo captured smaller amounts of $CO_2$ as compared with the $CO_2$ capturing material according to Comparative Example 1 which is an oxide containing Ce alone.

It is considered that a $CO_2$ capturing material may capture a larger amount of $CO_2$ as compared with the $CO_2$ capturing material according to Comparative Example 1 when a decrease in the amount of the captured $CO_2$ due to the addition of an element selected from Fe, Cu, V, and Mo is smaller than an increase in the amount of the captured $CO_2$ due to the addition of Al.

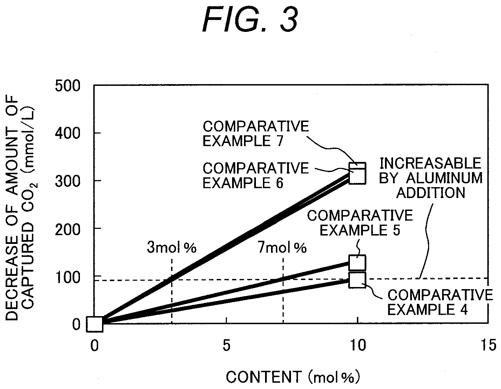

Figure 3 is a graph illustrating how the decrease in the amount of the captured $CO_2$ due to the addition of any one of Fe, Cu, V, and Mo varies depending on the content of the element. The decrease in the amount of the captured $CO_2$ in Figure 3 was calculated according to Expression (2):

$$\text{(decrease in amount of captured } CO_2) = \text{(amount of}$$

$$\text{captured } CO_2 \text{ of Comparative Example 1}) - \text{(amount of captured}$$

$$CO_2 \text{ of each comparative example)} \qquad (2)$$

In Figure 3, the increase in the amount of the captured $CO_2$ in Example 1 as compared with Comparative Example 1 is indicated by dashed lines so as to indicate, as a reference, the amount of the captured $CO_2$ in Example 1 which contains 10% of Al. Specifically, Example 1 captures $CO_2$ in a larger amount as compared with Comparative Example 1 by 90 mmol/L.

Assuming that the decrease in the amount of the captured $CO_2$ is proportional to the element content, the decrease in the amount of the captured $CO_2$ of a $CO_2$ capturing material is when the $CO_2$ capturing material contains 1% by mole of any one of the elements: 9 mmol/L per percent by mole of Fe, 14 mmol/L per percent by mole of Cu, 31 mmol/L per percent by mole of V, and 31 mmol/L per percent by mole of Mo. Based on these values, preferred contents of the elements so as to offer a higher amount of the captured $CO_2$ as compared with Comparative Example 1 were estimated. The results are as follows.

The estimated preferred contents are 10% by mole or less for Fe, 7% by mole or less for Cu, 3% by mole or less for V, and 3% by mole or less for Mo. The $CO_2$ capturing material preferably has such a composition that the total of the decreases in the amount of the captured $CO_2$ is 90 mmol/L or less when the $CO_2$ capturing material contains two or more of these metal elements. Specifically, the $CO_2$ capturing material preferably has such a composition as to meet a condition specified by Expression (1).

Exemplary configurations of the $CO_2$ recovery apparatus will be illustrated below.

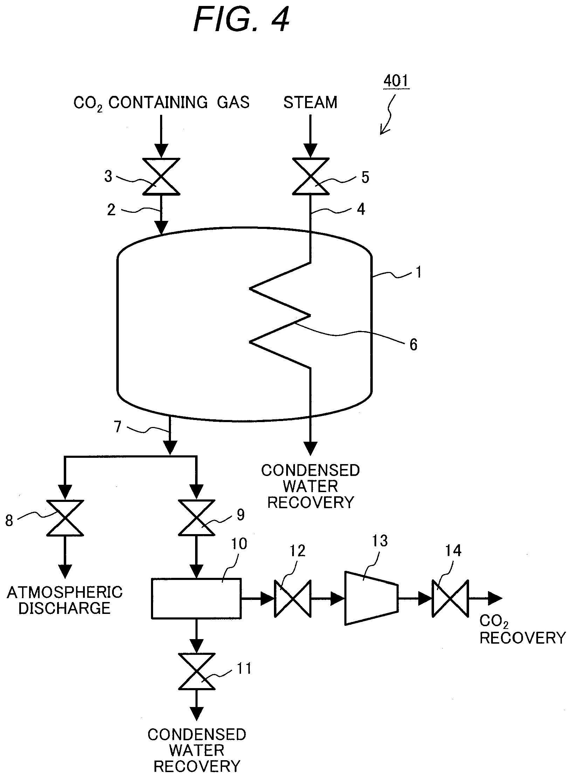

Figure 4 illustrates an exemplary $CO_2$ recovery apparatus using the $CO_2$ capturing material, according to an embodiment of the present invention.

In Figure 4, a carbon dioxide recovery apparatus 401 ($CO_2$ recovery apparatus) includes a line 2 with a valve 3; a reactor 1; a line 7; a line with a valve 8; a heat-transfer tube 6 (heat-exchanging unit); a line 4 with a valve 5; a recovery line; a condenser 10; a line with a valve 9; a line with a valve 11; a compressor 13 ($CO_2$ compressor); a line with a valve 12; and a line with a valve 14. The reactor 1 is packed with the $CO_2$ capturing material according to the present invention. A $CO_2$-containing gas is introduced into the reactor via the line 2 with the valve 3. From the reactor 1, gases are discharged via the line 7. The gases may be discharged into the atmosphere via the line with the valve 8. The heat-transfer tube 6 has a heat-transfer surface in the reactor 1. Water vapor is introduced into the heat-transfer tube 6 via the line 4 with the valve 5. From the heat-transfer tube 6, condensed water is discharged and recovered via the recovery line. Alternatively, the gases from the reactor 1 may be introduced into the condenser 10 via the line with the valve 9. The condenser 10 condenses water vapor in the gases to give condensed water and residual gases. The condensed water from the condenser 10 is recovered via the line with the valve 11. The residual gases from the condenser 10 are introduced into the compressor 13 via the line with the valve 12. The compressor 13 compresses and liquefies $CO_2$ in the gases. The liquefied $CO_2$ is recovered via the line with the valve 14.

To capture and remove $CO_2$ from the $CO_2$-containing gas, the $CO_2$-containing gas is introduced into the reactor 1, and the gas, from which $CO_2$ has been removed, is discharged to the atmosphere. To desorb $CO_2$ from the $CO_2$ capturing material, water vapor is introduced into the heat-transfer tube 6 to heat the $CO_2$ capturing material to thereby

desorb $CO_2$ from the capturing material. Water vapor in the desorbed gases is removed with the condenser 10. Residual gases are introduced into the compressor 13, and compressed and liquefied to give liquefied $CO_2$. The liquefied $CO_2$ is recovered.

The apparatus may have another configuration in which a high-temperature gas is introduced into the reactor to bring the high-temperature gas into contact with the carbon dioxide capturing material to thereby heat the carbon dioxide capturing material. Examples of the gas at a high temperature include, but are not limited to, gases obtained from the air; inert gases such as nitrogen gas; $CO_2$; and water vapor (steam). When it is acceptable that the recovered gases have a low $CO_2$ concentration, the air or nitrogen may be used as the high-temperature gas. When the $CO_2$ concentration has to be higher, $CO_2$ may be used as the high-temperature gas. When the high-temperature gas has to be separated from the desorbed gas, water vapor is preferably used. This is because the water vapor has a low condensation temperature.

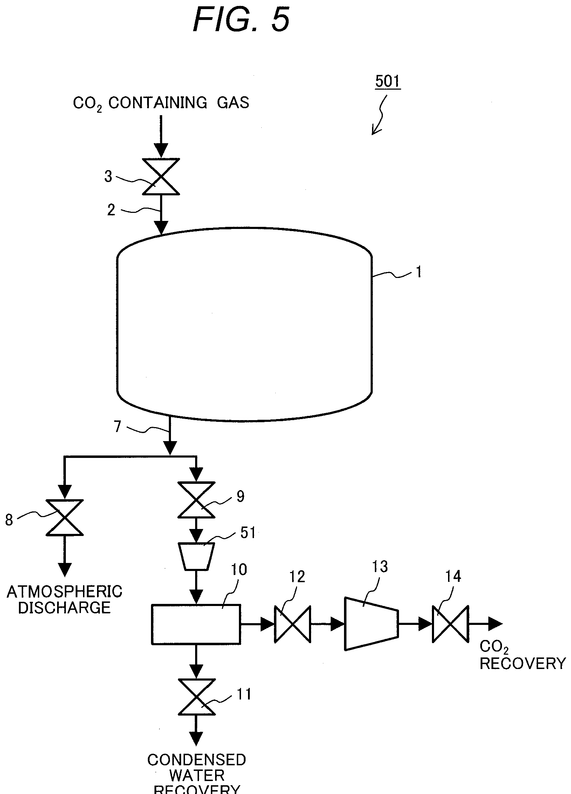

Figure 5 illustrates another exemplary $CO_2$ recovery apparatus using the $CO_2$ capturing material, according to another embodiment of the present invention.

In Figure 5, a carbon dioxide recovery apparatus 501 includes the line 2 with the valve 3, the reactor 1, the line 7, the line with the valve 8, a decompressor 51, the condenser 10, the line with the valve 9, the line with the valve 11, the compressor 13, the line with the valve 12, and the line with the valve 14. The reactor 1 is packed with the $CO_2$ capturing material according to the present invention. A $CO_2$-containing gas is introduced into the reactor 1 via the line 2 with the valve 3. From the reactor 1, gases are discharged via the line 7. The gases may be discharged to the atmosphere via the line with the valve 8. The decompressor 51 is configured to reduce the internal pressure of the reactor 1. Gases discharged from the decompressor 51 are introduced into the condenser 10 via the line with the valve 9. The condenser 10 condenses water vapor in the gases to give condensed water and residual gases. The condensed water from the condenser 10 is recovered via the line with the valve 11. The residual gases from the condenser 10 are introduced into the compressor 13 via the line with the valve 12. The compressor 13 compresses and liquefies $CO_2$ to give liquefied $CO_2$. The liquefied $CO_2$ is recovered via the line with the valve 14.

To capture and remove $CO_2$ from the $CO_2$-containing gas, the $CO_2$-containing gas is introduced into the reactor 1, and gases from which $CO_2$ has been removed are discharged to the atmosphere. To desorb $CO_2$ from the $CO_2$ capturing material, the decompressor 51 reduces the internal pressure of the reactor 1 to desorb $CO_2$ from the $CO_2$ capturing material, water vapor (moisture vapor) is removed from the desorbed gases using the condenser 10, and the residual gases are introduced into the compressor 13 to be compressed and liquefied to give liquefied $CO_2$. The liquefied $CO_2$ is recovered.

The apparatus may further include a pressurization unit (e.g., a compressor) (not shown). The pressurization unit is disposed upstream (in the line 2) from the reactor 1. The pressurization unit increases the internal pressure of the reactor 1. $CO_2$ adsorption is more accelerated with an increasing $CO_2$ partial pressure in the $CO_2$-containing gas. Accordingly, it may be preferred to pass the $CO_2$-containing gas which is pressurized with the pressurization unit through the reactor in some concentrations and/or in some temperature ranges.

**Reference Signs List**

| | |
|---|---|
| 1: | reactor, |
| 2, 4, and 7: | line, |
| 3, 5, 8, 9, 11, 12, and 14: | valve, |
| 6: | heat-transfer tube, |
| 10: | condenser, |
| 13: | compressor, |
| 51: | decompressor, and |
| 401 and 501: | carbon dioxide recovery apparatus. |

**Claims**

1. A carbon dioxide capturing material for separating and recovering carbon dioxide from a carbon-dioxide-containing gas, the carbon dioxide capturing material comprising
an oxide containing Ce and Al,
wherein the oxide contains Ce in a highest content among metal elements in the oxide and contains Al in a content of 0.01% by mole to 40% by mole.

2. The carbon dioxide capturing material according to claim 1,
   wherein the content of Ce is 40% by mole or more.

3. The carbon dioxide capturing material according to one of claims 1 and 2,
   wherein the oxide further contains at least one element selected from the group consisting of Fe, Cu, V, and Mo,
   the content of the element being 0.01% by mole or more.

4. The carbon dioxide capturing material according to claim 3,
   wherein the contents of Fe, Cu, V, and Mo meet a condition specified by Expression (1):

$$(Fe\ content) \times 1.0 + (Cu\ content) \times 1.3 + (V\ content) \times 3.3 + (Mo\ content) \times 3.3 \leq 10 \qquad (1)$$

   wherein the contents in the expression are indicated in mole percent.

5. The carbon dioxide capturing material according to any one of claims 1 to 4,
   wherein the oxide further contains 0.01% to 50% by mole in total of at least one element selected from the group
   consisting of La, Pr, Nd, Pm, Sm, Eu, Gd, Tb, Dy, Ho, Er, Tm, Yb, and Lu.

6. A carbon dioxide recovery apparatus using the carbon dioxide capturing material according to any one of claims 1 to 5.

7. A carbon dioxide recovery apparatus comprising:

   a reactor packed with the carbon dioxide capturing material according to any one of claims 1 to 5;
   a line that introduces the carbon-dioxide-containing gas into the reactor;
   a line that discharges the carbon-dioxide-containing gas from the reactor;
   a heating unit that heats the reactor; and
   a condenser that condenses water vapor in the carbon-dioxide-containing gas.

8. A carbon dioxide recovery apparatus comprising:

   a reactor packed with the carbon dioxide capturing material according to any one of claims 1 to 5;
   a line that introduces the carbon-dioxide-containing gas into the reactor;
   a line that discharges the carbon-dioxide-containing gas from the reactor;
   a decompression unit that reduces an internal pressure of the reactor; and
   a condenser that condensates water vapor in the carbon-dioxide-containing gas.

9. A carbon dioxide recovery apparatus comprising:

   a reactor packed with the carbon dioxide capturing material according to any one of claims 1 to 5;
   a line that introduces the carbon-dioxide-containing gas into the reactor;
   a line that discharges the carbon-dioxide-containing gas from the reactor;
   a pressurization unit that increases an internal pressure of the reactor; and
   a condenser that condenses water vapor in the carbon-dioxide-containing gas.

10. The carbon dioxide recovery apparatus according to any one of claims 7 to 9, further comprising
    a compressor disposed downstream from the condenser, the compressor compressing the carbon-dioxide-containing gas.

11. The carbon dioxide recovery apparatus according to claim 7,
    wherein the heating unit introduces a high-temperature gas into the reactor and brings the high-temperature gas
    into contact with the carbon dioxide capturing material.

12. The carbon dioxide recovery apparatus according to claim 7,
    wherein the heating unit is a heat-exchanging unit disposed in the reactor, and
    wherein the heating unit heats the carbon dioxide capturing material by passing a heat-transfer medium through the heat-exchanging unit.

13. The carbon dioxide recovery apparatus according to any one of claims 7 to 12, further comprising an arrangement that introduces a gas for reducing a carbon dioxide partial pressure in the reactor.

14. The carbon dioxide recovery apparatus according to claim 13, wherein the gas for reducing the carbon dioxide partial pressure is a water vapor.

## FIG. 1

## FIG. 2

# FIG. 3

# FIG. 4

# FIG. 5

501

CO$_2$ CONTAINING GAS

3
2

1

7

8
9

51

ATMOSPHERIC
DISCHARGE

10     12     13     14

CO$_2$
RECOVERY

11

CONDENSED
WATER
RECOVERY

## INTERNATIONAL SEARCH REPORT

| International application No. |
| --- |
| PCT/JP2014/077440 |

A. CLASSIFICATION OF SUBJECT MATTER
*B01J20/08*(2006.01)i, *B01D53/02*(2006.01)i, *B01D53/04*(2006.01)i, *B01J20/34*
(2006.01)i, *C01B31/20*(2006.01)i

According to International Patent Classification (IPC) or to both national classification and IPC

B. FIELDS SEARCHED

Minimum documentation searched (classification system followed by classification symbols)
B01J20/08, B01D53/02, B01D53/04, B01J20/34, C01B31/20

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)
JSTPlus(JDreamIII)

C. DOCUMENTS CONSIDERED TO BE RELEVANT

| Category* | Citation of document, with indication, where appropriate, of the relevant passages | Relevant to claim No. |
| --- | --- | --- |
| X | JP 2013-59703 A  (Hitachi, Ltd.), 04 April 2013 (04.04.2013), | 1,2,6-8,11, 13,14 |
| Y | claims; paragraphs [0023], [0025]; example 9; fig. 7 & US 2013/0064746 A1    & EP 2567751 A1 & CA 2785323 A1 | 3-5,9,10,12 |
| Y | JP 10-272336 A  (Nissan Motor Co., Ltd.), 13 October 1998 (13.10.1998), claims; examples (Family: none) | 3-5,9,10,12 |
| Y | JP 2012-110874 A  (Hitachi, Ltd.), 14 June 2012 (14.06.2012), claims; paragraphs [0016], [0017]; examples (Family: none) | 5,9,10,12 |

☒ Further documents are listed in the continuation of Box C.          ☐ See patent family annex.

| | |
| --- | --- |
| * Special categories of cited documents: "A" document defining the general state of the art which is not considered    to be of particular relevance "E" earlier application or patent but published on or after the international filing date "L" document which may throw doubts on priority claim(s) or which is cited to establish the publication date of another citation or other special reason (as specified) "O" document referring to an oral disclosure, use, exhibition or other means "P" document published prior to the international filing date but later than the priority date claimed | "T" later document published after the international filing date or priority date and not in conflict with the application but cited to understand the principle or theory underlying the invention "X" document of particular relevance; the claimed invention cannot be considered novel or cannot be considered to involve an inventive step when the document is taken alone "Y" document of particular relevance; the claimed invention cannot be considered to involve an inventive step when the document is combined with one or more other such documents, such combination being obvious to a person skilled in the art "&" document member of the same patent family |

| Date of the actual completion of the international search | Date of mailing of the international search report |
| --- | --- |
| 09 January 2015 (09.01.15) | 27 January 2015 (27.01.15) |

| Name and mailing address of the ISA/ Japan Patent Office 3-4-3,Kasumigaseki,Chiyoda-ku, Tokyo 100-8915,Japan | Authorized officer Telephone No. |

Form PCT/ISA/210 (second sheet) (July 2009)

**INTERNATIONAL SEARCH REPORT**

International application No.

PCT/JP2014/077440

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2011-173059 A  (Hitachi, Ltd.),<br>08 September 2011 (08.09.2011),<br>claims; paragraph [0090]; fig. 1 to 5<br>(Family: none) | 9 |
| Y | JP 2002-11326 A  (Toshiba Corp.),<br>15 January 2002 (15.01.2002),<br>paragraphs [0008], [0032], [0049]; fig. 1 to 9<br>(Family: none) | 10,12 |
| A | JP 2003-19435 A  (Daikin Industries, Ltd.),<br>21 January 2003 (21.01.2003),<br>paragraphs [0030], [0040]; fig. 1 to 5<br>(Family: none) | 1-14 |
| A | JP 2001-46878 A  (N.E. Chemcat Corp.),<br>20 February 2001 (20.02.2001),<br>entire text; all drawings<br>& US 6660240 B1        & EP 1057518 A2<br>& KR 10-2001-0066818 A  & CN 1483502 A<br>& CA 2311848 A1 | 1-14 |
| A | JP 2011-522692 A  (Rhodia Operations),<br>04 August 2011 (04.08.2011),<br>entire text<br>& US 2011/0162525 A1    & EP 2296782 A1<br>& WO 2009/144143 A1    & FR 2931699 A1<br>& AU 2009253287 A1    & CN 102036735 A | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013059703 A